# EUROPÄISCHE PATENTSCHRIFT

(11) **EP 1 430 989 B1**
(45) Veröffentlichungstag und Bekanntmachung des Hinweises auf die Patenterteilung: **25.11.2009**
(21) Anmeldenummer: 03027830.3
(22) Anmeldetag: 04.12.2003
(51) Int. Cl.: B23P 21/00, B62D 65/00, B25J 9/06, B25J 9/16, B23K 37/047

(54) **Verfahren und Vorrichtung zum Positionieren von zusammenzufügenden Bauteilen**
Method and apparatus for positioning parts to be assembled
Procédé et dispositif de positionnement des éléments à assembler

(30) Priorität: 16.12.2002 DE 10258633
(43) Veröffentlichungstag der Anmeldung: 23.06.2004
(73) Patentinhaber: KUKA Roboter GmbH, 86165 Augsburg (DE)
(72) Erfinder: Berninger, Alwin, 86482 Aystetten (DE)
(74) Vertreter: Lempert, Jost

(56) Entgegenhaltungen:
- EP-A- 0 464 004
- DE-A- 4 016 033
- GB-A- 2 221 659
- GB-A- 2 327 913
- US-A1- 2002 138 962
- SAKAKIBARA S: "A two-armed intelligent robot assembles mini robots automatically" INDUSTRIAL ELECTRONICS, CONTROL, AND INSTRUMENTATION, 1996., PROCEEDINGS OF THE 1996 IEEE IECON 22ND INTERNATIONAL CONFERENCE ON TAIPEI, TAIWAN 5-10 AUG. 1996, NEW YORK, NY, USA,IEEE, US, 5. August 1996 (1996-08-05), Seiten 1879-1883, XP010203268 ISBN: 0-7803-2775-6
- PATENT ABSTRACTS OF JAPAN vol. 2000, no. 01, 31. Januar 2000 (2000-01-31) & JP 11 267838 A (TOSHIBA ENG CO LTD), 5. Oktober 1999 (1999-10-05)
- YAMADA Y ET AL: "DEVELOPMENT OF MULTI-ARM ROBOTS FOR AUTOMOBILE ASSEMBLY" PROCEEDINGS OF THE 1995 IEEE INTERNATIONAL CONFERENCE ON ROBOTICS AND AUTOMATION. NAGOYA,JAPAN, MAY 21 - 27. 1995, PROCEEDINGS OF THE INTERNATIONAL CONFERENCE ON ROBOTICS AND AUTOMATION, NEW YORK, IEEE, US, Bd. 3, 21. Mai 1995 (1995-05-21), Seiten 2224-2229, XP000731574 ISBN: 0-7803-1966-4

## Beschreibung

Die Erfindung betrifft ein Verfahren und eine Vorrichtung zum Positionieren von zusammenzufügenden Bauteilen.

Derartige gattungsgemäße Verfahren und Vorrichtungen sind an sich bekannt und werden im Automobilbau regelmäßig im Zuge des Zusammenschweißens der Karosserie aus deren diversen Teilkomponenten eingesetzt. So sieht der grobe Ablauf der Fertigung einer Rohkarosse folgendermaßen aus: Die Teilkomponenten eines Fahrzeugs, wie Unterboden, Anbauteile oder dergleichen, werden in einzelnen hierfür eingerichteten Anlagen vorgefertigt. Anschließend erfolgt das Zusammenfügen der Gesamtkarosse innerhalb einer Montageposition der Fertigung, einer sogenannten "Geo-Station". Nachgeschaltete weitere Fertigungsprozesse in der Ausschweißlinie (Schweißen, Lasern, Kleben, Nieten oder dergleichen) sorgen für eine ausreichende Steifigkeit der Karosse.

Die "Geo-Station" weist Einrichtungen auf, die zur Sicherstellung der Geometrie der zusammengefügten Gesamtkarosse ausgelegt sind. Dabei werden zunächst bestimmte Teilkomponenten der Karosserie innerhalb der "Geo-Station" durch stationäre Spannvorrichtungen, wie verschiebbare/drehbare Spannvorrichtungen oder NC-gesteuerte Spannstellen (vgl. Tabelle 1), in die gewünschten Positionen gebracht und anschließend geheftet. Danach werden weitere Teilkomponenten, wie Unterbodenbauteile, innerhalb der "Geo-Station" durch numerisch gesteuerte Spannstellen positioniert. Weitere Teilkomponenten, wie Seitenteile, werden der "Geo-Station" durch einzelne mobile Spannrahmen oder Spannpaletten zugeführt (Tabelle 1), in denen die entsprechenden Teilkomponenten gehalten sind und die innerhalb des Arbeitsprozesses geeignet mitgetaktet sind. Nach erfolgtem Zusammenheften der Bauteile zur Gesamtkarosse werden die an den Spannrahmen bzw. Spannpaletten angeordneten Greifer geöffnet, und die Spannrahmen bzw. Spannpaletten nach erfolgtem Passieren der "Geo-Station" von der Karosse getrennt und erneut dem Fertigungsablauf zugeführt.

Bei einer weiteren Variante zur Positionierung der zusammenzufügenden Bauteile werden diese um eine stationäre Spanninsel (vgl. Tabelle) mit fester Geometrie herum angeordnet und von dieser während des Heftens in Position gehalten.

Die vorbekannten Verfahren und Vorrichtungen zum Positionieren von zusammenzufügenden Bauteilen weisen prinzipbedingt eine Reihe von Nachteilen auf, die zusammenfassend in Tabelle 1 dargestellt sind (Quelle: Agiplan, Automobil Industrie Spezial Fabrikautomation, 47. Jahrgang, April 2002). Demnach weisen stationäre Spannvorrichtungen nur eine eingeschränkte Modellflexibilität auf und sind für Multi-Geometrien ungeeignet. Numerisch gesteuerte Spannstellen zeigen Nachteile bei der Anlagenverfügbarkeit und der Prozesssicherheit. Typenbezogene Spannpaletten ermöglichen nur eine eingeschränkte Zugänglichkeit der Fügeposition und besitzen hohe Betriebskosten. Typenbezogene Spanninseln sind für Multi-Geometrien nur bedingt geeignet, haben hohe Betriebskosten und zeichnen sich durch einen hohen Flächenverbrauch aus.

**Tabelle 1**

| | Verschiebbare/drehbare Spannvorrichtung | NC-gesteuerte Spannstellen | Typenbezogene Spannpalette | Typenbezogene Spanninsel |
|---|---|---|---|---|
| Spanntechnik | Stationär | Stationär | Mobil | Mobil |
| Horizontale Modell flexibilität (unterschiedliche Kfz-Größen) | - | 0 | + | + |
| Vertikale Modellflexibilität (unterschiedliche Modellvarianten) | - | + | + | + |
| Zugänglichkeit der Fügepositionen | 0 | 0 | 0 | + |
| Multigeometrien | - | 0 | + | 0 |
| Anlagenverfügbarkeit | 0 | - | + | + |
| Prozesssicherheit | 0 | - | + | + |
| Flächenverbrauch | + | + | + | - |
| Investitionsaufwand | 0 | + | + | 0 |
| Betriebskosten | 0 | + | 0 | 0 |
| Standardisierung der Spannfügepositionen | 0 | + | + | + |
| Offline Programmierbarkeit | - | + | - | - |

Die Druckschrift Sakakibara "A two-armed intelligent robot assembles mini robots automatically" ... 1996 zeigt lediglich einen Roboter mit zwei Roboterarmen, der zum Zusammenbau von Minirobotern dient, deren Einzelteile vor dem Roboter anzuordnen sind, wie dies in der Erläuterung in der Druckschrift aufgeführt und beispielsweise in den Figuren 1 und 5 dargestellt ist, wobei bei letzterer vor dem Roboter ein Tisch aufgestellt ist, auf dem der zweiarmige Roboter den Miniroboter zusammensetzt, indem er einzelne Teile desselben ineinander steckt, nachdem er beispielsweise zunächst die Basis von einer bereitgestellten Stelle genommen und auf den Tisch gestellt hat, dann eine Welleneinheit in diese einsetzt, Lager auf der Welleneinheit aufsetzt etc. Bei dem Gegenstand dieser Druckschrift handelt es sich somit lediglich um einen zweiarmigen Roboter oder einen Roboter mit zwei Armen, der nicht zum Einsatz bei dem gattungsgemäßen Verfahren oder auch der gattungsgemäßen Vorrichtung geeignet ist.

Der Erfindung liegt die Aufgabe zugrunde, die prinzipbedingten Nachteile des gattungsgemäßen Standes der Technik zu überwinden und einen neuen Weg in der Fertigungstechnik zu öffnen, der sich insbesondere durch hohe Modellflexibilität, Raumersparnis, gute Zugänglichkeit und einen beschleunigten Fertigungsablauf auszeichnet.

Diese Aufgabe wird mit einem Verfahren gelöst, welches die kennzeichnenden Merkmale des Anspruchs 1 aufweist. Weiter wird die Aufgabe durch eine Vorrichtung nach dem Anspruch 13 gelöst.

Der Begriff Zentralmodul beinhaltet, dass es sich um ein Modul handelt, das zum Halten der zu fügenden Bauteile zentral innerhalb der - von eben diesem Zentralmodul - gehaltenen Füge-Anordnung der Bauteile angeordnet ist, die zu fügenden Bauteile das Zentralmodul also umgeben.

Auf diese Weise lässt sich durch den Einsatz des erfindungsgemäßen Verfahrens bzw. der erfindungsgemäßen Vorrichtung eine hohe Modellflexibilität, beispielsweise zur Anpassung an Nachfrageschwankungen oder zur Integration von Nischenmodellen, erreichen. Durch das Wegfallen typenspezifischer Spannmittel, Vorrichtungen oder großvolumiger numerisch gesteuerter Spannachsen erreicht die erfindungsgemäße Vorrichtung ein hohes Maß an Raumersparnis. Zudem ist eine komplizierte Vermessung bzw. Paarung einzelner Spannrahmen zu einer maßhaltigen Spannkiste nicht länger notwendig. Die aufwendige Suche nach Fehlerquellen, beispielsweise nach Spannrahmen außerhalb der Toleranz, entfällt. Anstelle von jeweils vier Spannrahmen pro Karosserie (Seitenteile, Unterboden, Dach) wird zum Verspannen der Karosserieteile vorzugsweise nur eine einzige Vorrichtung benötigt, die zudem aufgrund ihrer Anordnung im Inneren der Karosserie eine gute Zugänglichkeit von außen zu den Fügeprozessstellen ermöglicht. Durch das Halten der Bauteile aus einer Position innerhalb der Karosserie-Struktur sind darüber hinaus keine zusätzlichen Abdeckungen zum Schutz der vorlackierten Bleche notwendig.

Darüber hinaus kann vorgesehen sein, dass eine Anzahl der Arme jeweils mindestens ein Werkzeug zum Verbinden der zusammengefügten Bauteile aufweisen. Auf diese Weise schafft die Erfindung eine Vorrichtung, die in integraler Form sowohl zum Fügen als auch zum Verbinden von Bauteilen, z.B. durch Schweißen, Clinchen, Kleben oder dergleichen, geeignet ist und somit den anschließenden Einsatz weiterer Handhabungsgeräte wenigstens teilsweise entbehrlich macht. Vorzugsweise erfolgt demnach das Zusammenheften durch die Spannvorrichtung selbst mittels geeigneter Werkzeuge. Dies ist mit Zeit-, Raum- und Kostenersparnis verbunden. Geeignete Werkzeuge können alle im Karosserie-Rohbau verwendete Werkzeuge sein, wie Werkzeuge zum Punktschweißen (Zangen), Schmelzschweißen, Laserschweißen, Reibschweißen, Bölzenschweißen, Nieten Clinchen, Kleben.

Nach einer Weiterbildung des erfindungsgemäßen Verfahrens ist vorgesehen, dass die Spannvorrichtung in einer ersten Ruhestellung mit eingefalteten und/oder an das Zentralmodul angelegten Armen bei einer vorbestimmten Ruheposition wartet, dass anschließend die zu fügenden Bauteile durch weitere geeignete Handhabungsgeräte, wie Industrieroboter, zumindest grob zusammengefügt werden, wobei die Spannvorrichtung in einem Raum innerhalb der zusammenzufügenden Bauteile angeordnet ist, und dass dann durch geeignete Positionierung der Arme im Raum die Bauteile verspannt werden. Dabei stützt sich die Spannvorrichtung erfindungsgemäß direkt auf einem Bodenteil der Bauteilstruktur ab und weist zu diesem Zweck vorzugsweise Bolzen, Zapfen oder andere geeignet ausgebildete Abstützeinrichtungen auf. Alternativ oder zusätzlich ist es zur Entlastung des Bodens, z.B. des Karosseriebodens, möglich, dass sich die Spannvorrichtung auf einem die Bauteile tragenden Förderelement, wie einem Rahmenelement abstützt. In letzterem Fall besitzt die erfindungsgemäße Spannvorrichtung vorzugsweise geeignet ausgebildet Abstützeinrichtungen in Form von Gelenk- und/oder Teleskoparmen.

Es kann bei einem erfindungsgemäßen Verfahren weiterhin vorgesehen sein, dass vor einem Zusammentreffen der Bauteile Positionsmessungen an den zu fügenden Bauteilen und bei festgestellten Positionsabweichungen aktive Positionskorrekturen durch die Spannvorrichtung vorgenommen werden. Vorzugsweise werden dabei Messwerte der Positionsmessungen zwischengespeichert und nach Erkennung eines Abweichungstrends zur Korrektur eines Steuerungsprogramms für die Spannvorrichtung und/oder für Meldungen an eine Qualitätssicherungseinheit verwendet. Eine erfindungsgemäße Vorrichtung weist daher vorzugsweise an den Armen Sensoren zum Aufnehmen von Positionsmesswerten für die Bauteile und weiterhin in Weiterbildung eine Speichereinheit zum Zwischenspeichern von Positionswerten, wie einen flüchtigen Speicher oder einen Massenspeicher, auf. Zusätzlich zu einer Positionsmessung können auch Kraftmessungen und/oder Materialprüfungen, beispielsweise an Verbindungspunkten, vorgenommen und gespeichert werden.

Eine bevorzugten Ausgestaltung des erfindungsgemäßen Verfahrens sieht vor, dass die Spannvorrichtung nach einem anschließenden Zusammenheften oder weiteren nachgeschalteten Fertigungsprozessen, wie Schweißen oder dergleichen, sich selbständig wieder aus dem Raum innerhalb der Bauteile herausbewegt. Alternativ hierzu ist es nach einer weiteren Ausbildung des erfindungsgemäßen Verfahrens möglich, dass die Spannvorrichtung nach einem anschließenden Zusammenheften oder weiteren nachgeschalteten Fertigungsprozessen, wie Schweißen oder dergleichen, von einem weiteren Handhabungsgerät, wie einem Industrieroboter, wieder aus dem Raum innerhalb der Bauteile herausbewegt wird. Insbesondere im Rahmen der ersten dieser beiden Alternativen ist es möglich, dass die erfindungsgemäße Vorrichtung während des Zusammenfügens der Rohkarosserie in dieser "mitfährt", so dass auf diese Weise eine Umstellung von einer Taktfertigung auf eine Fließfertigung erreichbar ist. Auf diese Weise lassen sich die einzelnen Prozessschritte von einer auf mehrere Arbeitspositionen entzerren, was außerdem zu einer wünschenswerten Aufweitung des bisherigen Flaschenhalses "Geo-Station" führt.

Weitere bevorzugte Ausgestaltungen des erfindungsgemäßen Verfahrens sehen vor, dass die Arme nach Maßgabe einer Steuerungseinheit synchron im Raum positioniert werden. Alternativ oder zusätzlich kann vorgesehen sein, dass die Arme nach Maßgabe einer Steuerungseinheit asynchron im Raum positioniert werden. Nach einer weiteren bevorzugten Ausgestaltung des erfindungsgemäßen Verfahrens erfolgen die Bewegungen der Arme in jeweils mindestens drei Freiheitsgraden. Es ist somit im Zuge einer Fließfertigung möglich, Bauteile sukzessive zusammenzufügen und dabei auch komplexe Geometrien sicher zu verspannen.

Die gelenkigen Arme der erfindungsgemäßen Vorrichtung sind vorzugsweise für Bewegungen mit jeweils mindestens drei Freiheitsgraden ausgebildet.

Nach einer bevorzugten Ausgestaltung der erfindungsgemäßen Vorrichtung ist diese in einen Raum innerhalb einer gewünschten Anordnung der zu fügenden Bauteile einbringbar und nach einem anschließenden Zusammenheften der Bauteile oder weiteren nachgeschalteten Fertigungsprozessen wieder daraus entfernbar. Die erfindungsgemäße Vorrichtung ist daher vorzugsweise dergestalt ausgebildet, dass die Arme einfaltbar und/oder an das Zentralmodul anlegbar sind. Dadurch ist nach erfolgtem Zusammenheften der fertigen Rohkarosse eine besonders einfache Entnahme der erfindungsgemäßen Vorrichtung aus dem Raum innerhalb der zusammengefügten Bauteile gewährleistet. Dies kann grundsätzlich durch von der Vorrichtung unabhängige Hilfsmittel erfolgen, wie von Hand, durch einen Roboter, Kran, Schlitten oder ähnliche Vorrichtungen. In bevorzugter Ausgestaltungen ist vorgesehen, dass diese zum selbständigen Hineinfah-ren in einen Raum innerhalb der zu fügenden Bauteile ausgebildet ist und/oder dass diese zum selbständigen Hinausfahren aus dem Raum innerhalb der zu fügenden Bauteile ausgebildet ist. Dies bedeutet, dass die Vorrichtung selbständig ohne fremde Hilfe sich zu ihrem Arbeitsort hin bzw. nach erfolgtem Zusammenfügen der Teile aus der durch diese gebildeten Einheit herausbewegt.

Bevorzugte Weiterbildungen der erfindungsgemäßen Vorrichtung sehen vor, dass diese eine rechnergestützte Steuerungseinheit aufweist. Im Rahmen einer derartigen Ausgestaltung ist die erfindungsgemäße Vorrichtung als Spannroboter anzusehen und erreicht aufgrund der programmgesteuerten flexiblen Einsetzbarkeit eines Roboters eine entsprechend hohe Modellflexibilität, wobei zudem ein schneller Modellwechsel aufgrund der Tatsache möglich ist, dass hierzu lediglich ein Programmwechsel (Software-Wechsel), gegebenenfalls verbunden mit einem softwaremäßig steuerbaren oder manuellen Wechsel der Halteelemente und/oder Werkzeuge, statt wie bisher eines kompletten Hardware-Wechsels notwendig ist, wozu die erfindungsgemäße Vorrichtung vorzugsweise entsprechend geeignete Wechselkupplungen aufweist. Somit lässt sich auch die Zeit von der Entwicklung eines neuen Modells (mit einer neuen Modellgeometrie) bis zum Produktionsablauf aufgrund der gegebenen Offline-Programmierbarkeit reduzieren.

Weitere Ausgestaltungen der erfindungsgemäßen Vorrichtung sehen vor, dass die Arme Einrichtungen für eine Medienzuführung zu den Spannelementen und/oder den Werkzeugen aufweisen, wobei das Zentralmodul vorzugsweise Einrichtungen zur Medienversorgung für die Arme aufweist. Weiterhin ist in einer äußerst bevorzugten Ausbildung der erfindungsgemäßen Vorrichtung vorgesehen, dass das Zentralmodul eine Stromversorgungseinheit aufweist. Die Stromversorgungseinheit kann insbesondere autark ausgebildet sein, so dass gemeinsam mit einer autarken Medienversorgung der erfindungsgemäßen Vorrichtung gewährleistet ist, dass sich diese selbständig und flexibel im Rahmen des Fertigungsprozesses zwischen verschiedenen Arbeitspositionen bewegen kann, was - wie bereits erwähnt - zu einer weitgehenden Entzerrung der Prozessschritte und damit zu einer ökonomischeren Prozessgestaltung beiträgt.

Um auch im Rahmen von Anwendungen einsetzbar zu sein, die hohe Haltekräfte beim Zusammenfügen von Bauteilen erfordern, wie im Automobilbau, ist nach einer besonders bevorzugten Ausgestaltung der erfindungsgemäßen Vorrichtung vorgesehen, dass die Arme zum Bereitstellen hoher statischer Haltekräfte bis 3000 N ausgebildet sind. Solche Maßnahmen sind bekanntermaßen die Verwendung torsions- und verwindungssteifer Strukturelemente, Verwendung von Getrieben hoher Steifheit in Gelenken, Verwendung zusätzlicher oder entsprechend dimensionierter Haltebremsen.

Um im Rahmen des erfindungsgemäßen Verfahrens besonders flexibel einsetzbar zu sein, ist aus steuerungstechnischer Sicht vorzugsweise vorgesehen, dass jeder Arm einen eigenen steuerungsrelevanten Punkt (TCP) aufweist. Der TCP stellt den eigentlichen Wirkungspunkt am Ende eines Roboterarms oder des daran angebrachten Werkzeugs dar. Dieser Punkt, der sowohl innerhalb wie auch außerhalb mechanischer Teile liegen kann (z.B. bei einer geöffneten Schweißzange der virtuelle Punkt der Elektrodenberührung, bei Laserwerkzeugen der Fokuspunkt oder bei Schutzgasschweißbrennern der Lichtbogenort) wird in der Steuerung programmiert, verwaltet und beim Abfahren eines Programms reproduziert. Alle anderen Punkte des Roboterarms oder der gesamten Struktur sind der Steuerung nicht bekannt. Auf diese Weise verhält sich die erfindungsgemäße Vorrichtung steuerungstechnisch wie ein mehrarmiger, mehrachsiger Roboter und eröffnet auf diese Weise neue Wege der Fertigungstechnik, insbesondere beim Zusammenfügen von Karosserien im Automobilbau.

Weitere Vorteile und Eigenschaften der Erfindung ergeben sich aus den beigefügten Zeichnungen und der Beschreibung entsprechender Ausführungsbeispiele. Es zeigen:
- Fig. 1a bis 1d: schematische Darstellungen einer ersten Ausbildung der erfindungsgemäßen Vorrichtung zum Positionieren von Karosserieteilen eines Automobils;
- Fig. 2a, 2b: zwei schematische Darstellungen einer Automobilkarosse und eines Spannroboters mit eingeklappten und angelegten Armen zum Einsetzen oder Entfernen aus der Karosserie;
- Fig. 3a, 3b: schematische Darstellungen einer zweiten Ausführungsform der erfindungsgemäßen Spannvorrichtung mit Gelenk-/Teleskoparmen;
- Fig. 4a, 4b: schematische Darstellungen einer weiteren Ausführungsform der erfindungsgemäßen Vorrichtung, die sich außerhalb der Karosse auf einem Förderelement abstützt;
- Fig. 5: eine schematische Schnittdarstellung eines erfindungsgemäßen Spannroboters in Ge- ' lenkarmtechnik für (temporär) autarken Betrieb mit Andeutung einer nur zeitweise angeschlossenen Energieversorgung;
- Fig. 6: eine Schnittdarstellung eines erfindungsgemäßen Spannroboters in Gelenk-/Teleskoparmtechnik für (temporär) autarken Betrieb;
- Fig. 7: eine schematische Darstellung eines Gelenk-/Teleskoparmes für einen erfindungsgemäßen Spannroboter;
- Fig. 8: eine schematische Darstellung eines Tripodarmes für einen erfindungsgemäßen Spannroboter;
- Fig. 9: eine schematische Darstellung eines Gelenkarmes für einen erfindungsgemäßen Spannroboter;
- Fig. 10: Bodenansicht eines erfindungsgemäßen Spannroboters in Gelenkarmtechnik mit Abstützeinrichtungen zum unmittelbaren Aufsetzen auf einen Karosserieboden; und
- Fig. 11: ein Ablaufdiagramm eines Fügevorgangs unter Verwendung der erfindungsgemäßen Vorrichtung.

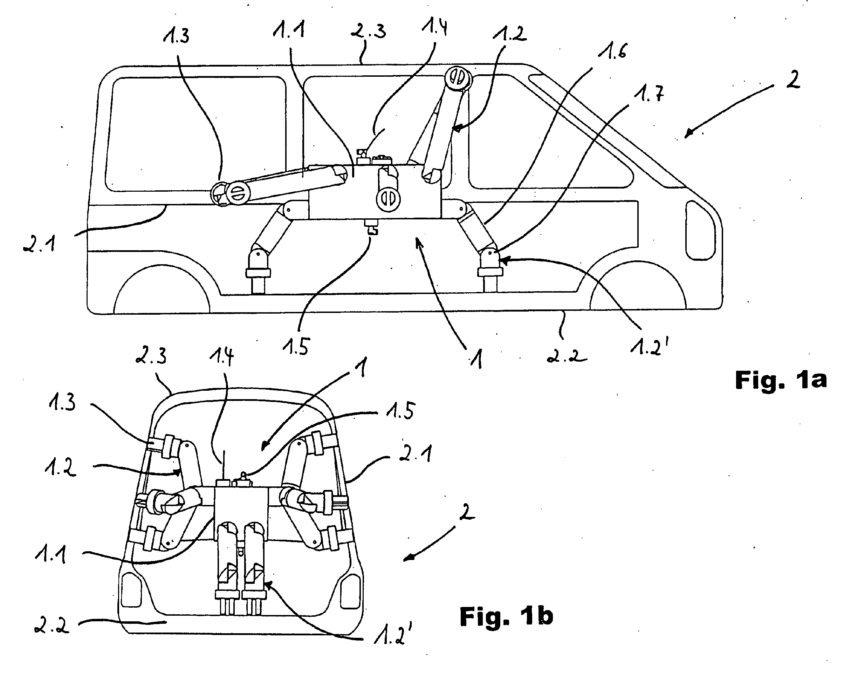

Die Fig. 1a bis 1d zeigen schematisch eine erfindungsgemäße Vorrichtung 1 zum Positionieren von Bauteilen, hier speziell Bauteilen, wie Seitenteile 2.1, Bodenteile 2.2 und Dach 2.3, für die Karosserie 2 eines Automobils anhand von zwei Beispielen (zwei verschieden großen Fahrzeugtypen).

Die erfindungsgemäße Vorrichtung 1 weist ein Zentralmodul 1.1 und mit dieser verbunden eine Mehrzahl von im Raum beweglichen Armen 1.2 in Form von Gelenkarmen auf, die an ihrem distalen Ende jeweils ein Halteelement 1.3 zum Verspannen der Bauteile 2.1, 2.2, 2.3 besitzen. Die Vorrichtung 1 stützt sich über untere Gelenkarme 1.2' direkt auf dem Boden 2.2 der Rohkarosse 2 ab. Das Zentralmodul 1.1 weist beim Ausführungsbeispiel der Fig. 1a-1d weiterhin eine Sende-/Empfangseinheit 1.4 zum Senden und Empfangen von Mess- und Steuersignalen bzw. elektromagnetischer Energie auf. Ferner besitzt sie Sensoren 1.5, wie Ultraschallsensoren oder dergleichen, zum Ermitteln von Positionsmesswerten für die zu fügenden Bauteile 2.1, 2.2, 2.3.

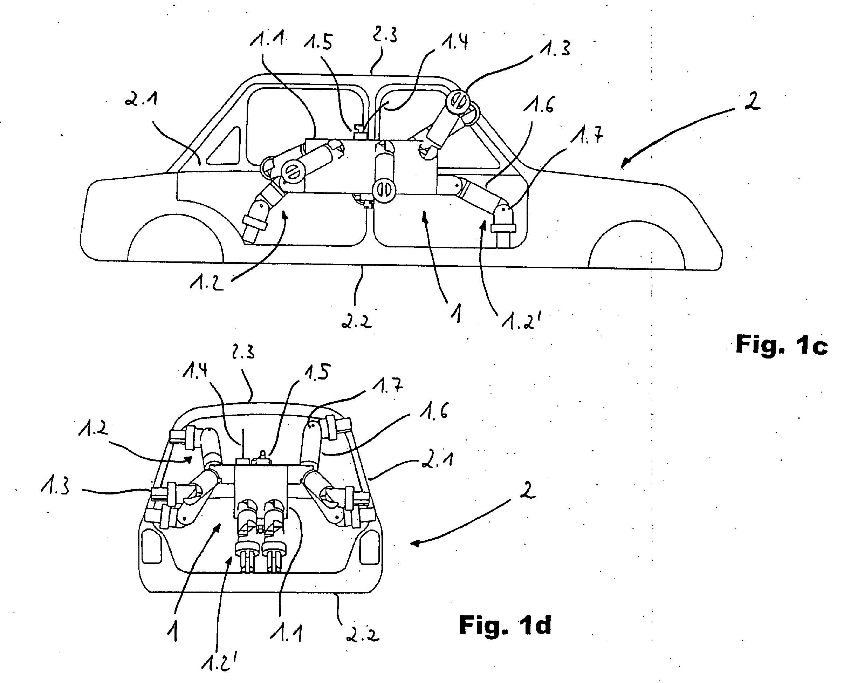

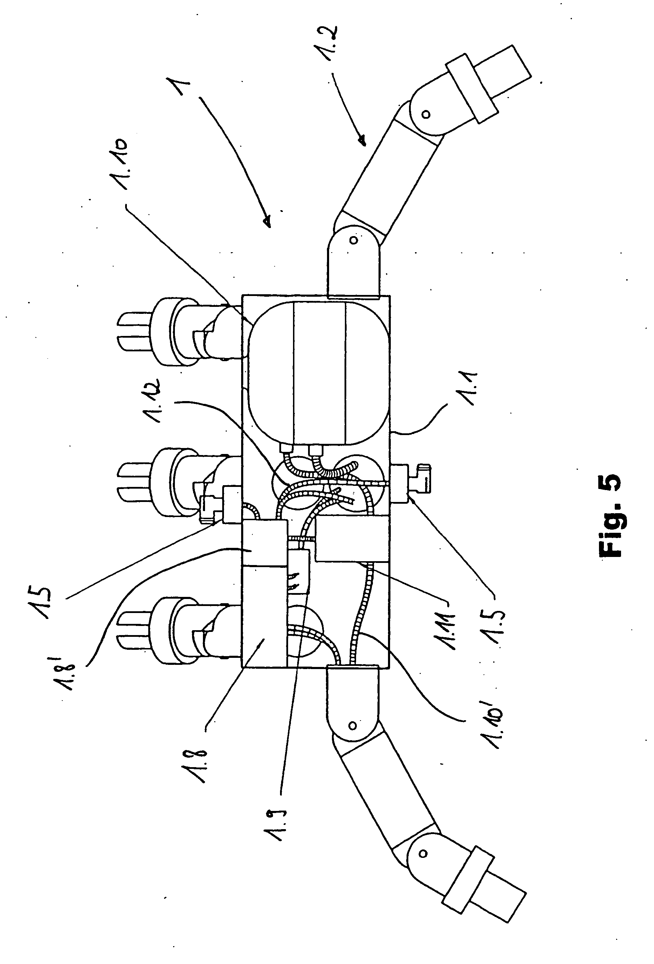

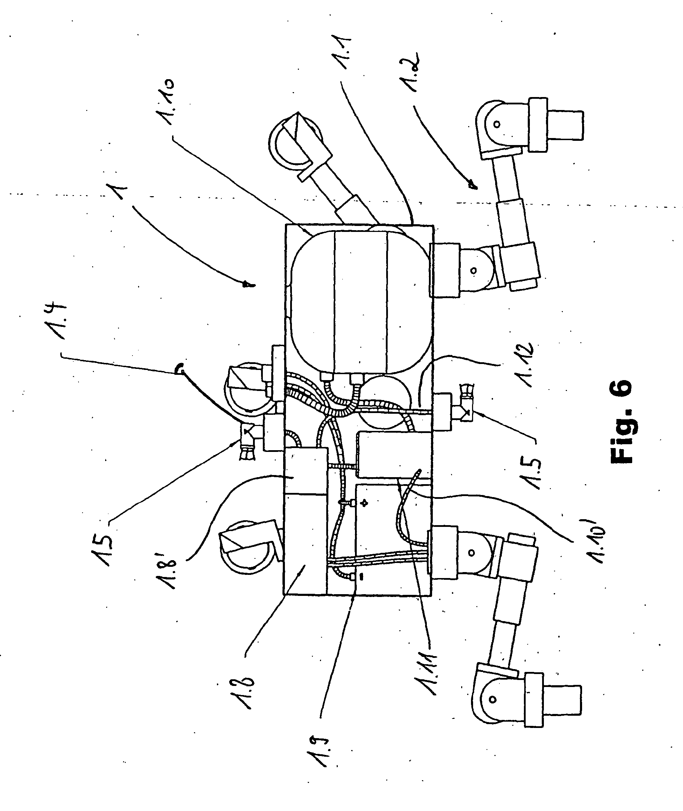

Die Arme 1.2, 1.2' der in Fig. 1a bis 1d dargestellten erfindungsgemäßen Vorrichtungen 1 weisen jeweils eine Anzahl von Lenkern 1.6 auf, die untereinander und mit dem Zentralmodul 1.1 durch Gelenke 1.7 gelenkig verbunden sind. Die Arme 1.2, 1.2' sind jeweils mit mindestens drei und bis zu sechs Freiheitsgraden im Raum beweglich, so dass die erfindungsgemäße Vorrichtung 1 als mehrarmiger mobiler Spannroboter angesehen werden kann. Auf diese Weise ist es nach Maßgabe einer internen oder externen rechnergestützten Steuerungseinheit (1.8; Fig. 5, 6) mit ein und derselben Vorrichtung 1 möglich, stark unterschiedliche Karosseriegeometrien zu fügen bzw. zu verspannen, wobei nur eine minimale Anpassung der Hardware notwendig ist, wie ein Vergleich der Fig. 1a, b einerseits und Fig. 1c, d andererseits zeigt.

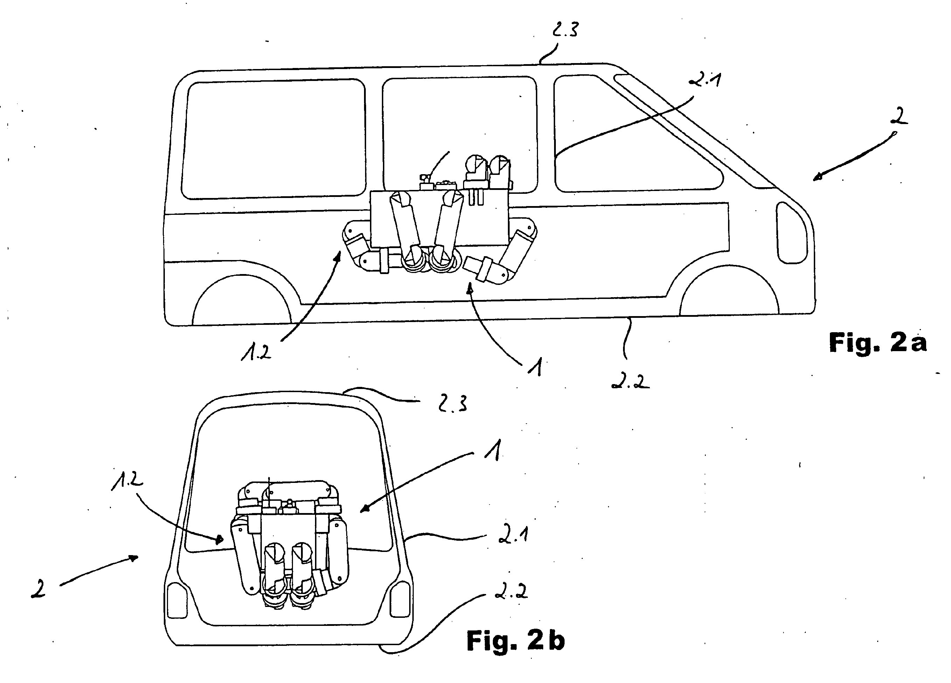

Nach erfolgtem Zusammenheften der Karosserie-Bauteile 2.1, 2.2, 2.3 durch ein an den Armen 1.2 angeordnetes Werkzeug (nicht gezeigt) und/oder durch externe Werkzeuge lässt sich die erfindungsgemäße Vorrichtung 1 nach Einklappen bzw. Anlegen der Arme 1.2 gemäß der Fig. 2a, 2b leicht aus dem Innenraum der Karosserie 2 entfernen, beispielsweise durch ein weiteres Handhabungsgerät (nicht gezeigt), wie einen Industrieroboter. Es ist jedoch auch möglich, die erfindungsgemäße Vorrichtung 1 so auszubilden, dass sie sich (nach Einklappen bzw. Anlegen der Arme 1.2) selbständig aus der Karosserie 1.2 entfernen kann. Die anfängliche Positionierung der Karosseriebauteile 2.1, 2.2, 2.3 erfolgt entweder vollständig von außen durch geeignete Handhabungsgeräte, wie Industrieroboter, wobei die erfindungsgemäße Vorrichtung vorzugsweise selbständig oder durch ein weiteres Handhabungsgerät in den entstehenden Innenraum der Karosserie 2 eingebracht wird. Alternativ kann sich die erfindungsgemäße Vorrichtung in einer Art Warteposition befinden, so dass die Karosserie 2 quasi um die erfindungsgemäße Vorrichtung 1 "herumgebaut" wird. Dabei ist es möglich, die Zuführung der Karosseriebauteile 2.1, 2.2, 2.3 durch externe Handhabungsgeräte nur bis in eine "Vorposition" durchzuführen, in der sie durch die erfindungsgemäße Vorrichtung aktiv übernommen und endgültig positioniert werden.

Die erfindungsgemäße Vorrichtung 1 wird beim Ausführungsbeispiel der Fig. 1a bis 1d zunächst auf den Karosserieboden 2.2 aufgesetzt und - wie bereits erwähnt - nach erfolgtem Zusammenheften der Karosserie 2 mit angelegten Armen 1.2 von außen wieder entnommen, beispielsweise durch die Öffnung für die Frontscheibe, oder gelangt durch Selbstbewegung aus der fertigen Rohkarosse 2 hinaus. Für die Abstützung (Befestigung) des Spannroboters 1 in der Rohkarosse 2 sind folgende alternative oder kombinierte Möglichkeiten gegeben:

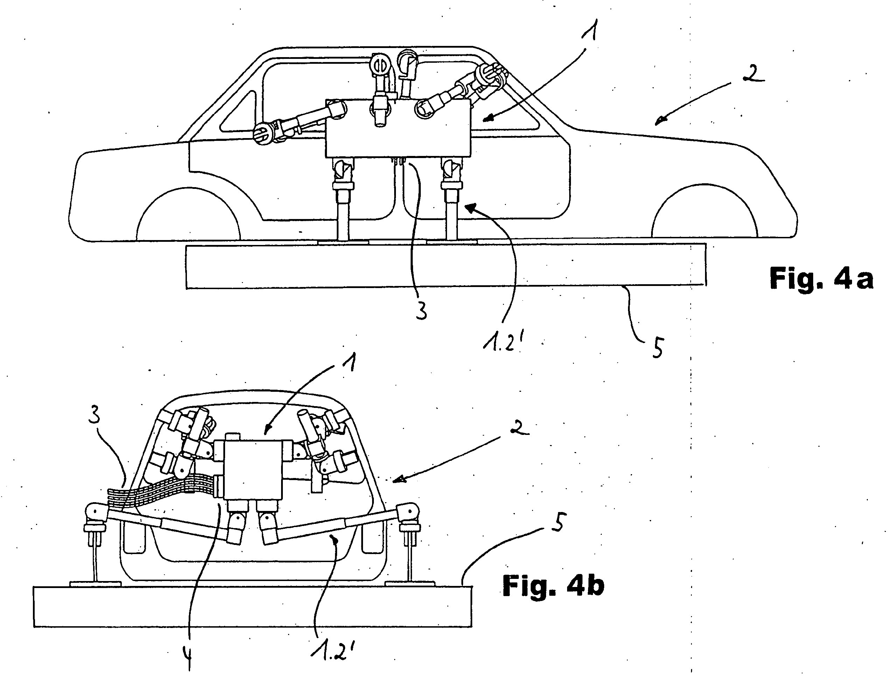

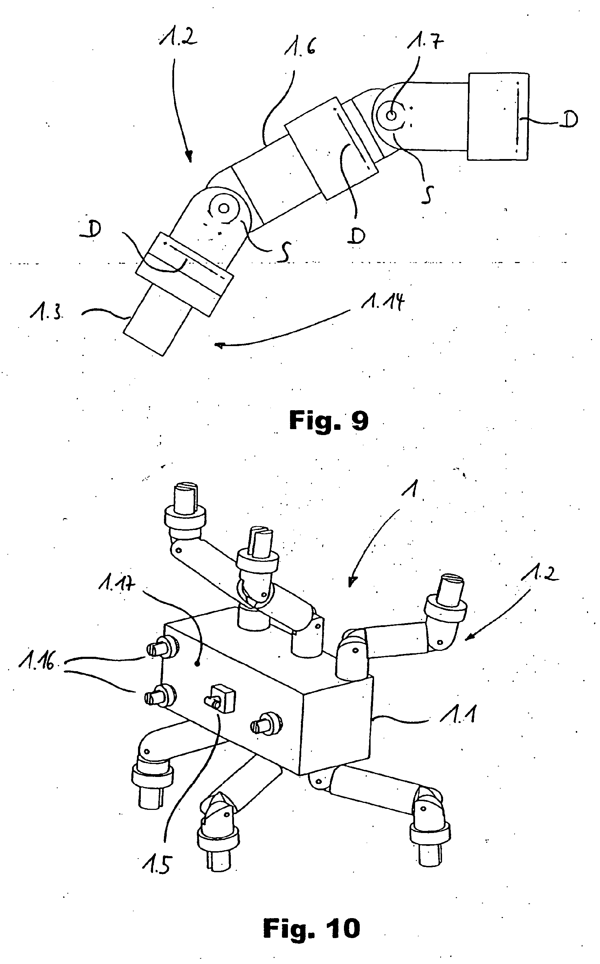

Am Boden des Spannroboters 1 können Bolzen, Zapfen oder Greifeinrichtungen 1.16 (Fig. 10) zur Verbindung mit dem Karossenboden 2.2 vorgesehen sein. Gemäß der Fig. 1-3 kann die Verbindung mit dem Karossenboden auch über Gelenkarme 1.2' erfolgen. Beim Ausführungsbeispiel der Fig. 4a, 4b stützt sich der erfindungsgemäße Spannroboter 1 über speziell ausgebildete untere Gelenk-/Teleskoparme 1.2' auf einem die Karosserie 2 tragenden Förderelement, wie einem Rahmenelement 5 oder einem anderen Teil eines Förderers (nicht gezeigt) ab. Dadurch wird eine Entlastung des Karossenbodens erreicht, so dass auf Unterfütterung oder zusätzliche Abstützung des Karossenbodens verzichtet werden kann.

Erfindungsgemäß erfolgt das Ergreifen und Halten der Bauteile 2.1, 2.2, 2.3 durch mindestens eine erfindungsgemäße Spannvorrichtung 1 (Spannroboter) von innen, d.h. von einer Position innerhalb einer gewünschten Anordnung der zu fügenden Bauteile, so dass eine optimale Zugänglichkeit von außen gewährleistet ist, was mit einem minimalen Platzbedarf, der allein durch die zu fügenden Bauteile 2.1, 2.2, 2.3 vorgegeben ist, einhergeht und wobei keinerlei zusätzliche Schutzmaßnahmen für vorlackierte Bauteile ergriffen werden müssen. Insbesondere bei großen Karossen und der Notwendigkeit vieler Spannpunkte können mehrere erfindungsgemäße Spannroboter 1 eingesetzt werden.

Der erfindungsgemäße Spannroboter 1 kann über das Halten und Fixieren von zugeführten Teilen hinaus diese auch aktiv, gegebenenfalls unter Kontrolle durch die Sensoren 1.5, positionieren. Damit wird der Prozess mit sequentiellen, teilweisen Fügevorgängen und zwischen- oder nachgeschalteten Messvorgängen möglich. Es können z.B. nach dem Setzen der ersten Verbindungspunkte kritische Positionen nachgemessen und bei Bedarf über den Spannroboter Positionskorrekturen durchgeführt werden. Die Messungen können von interner Sensorik 1.5 (am Körper des Spannroboters oder an den Armen) oder externer Sensorik (unabhängig vom Spannroboter, außerhalb der Karosse; nicht gezeigt) durchgeführt werden. Dies entspricht einer frühen und prozessnahen Qualitätskontrolle.

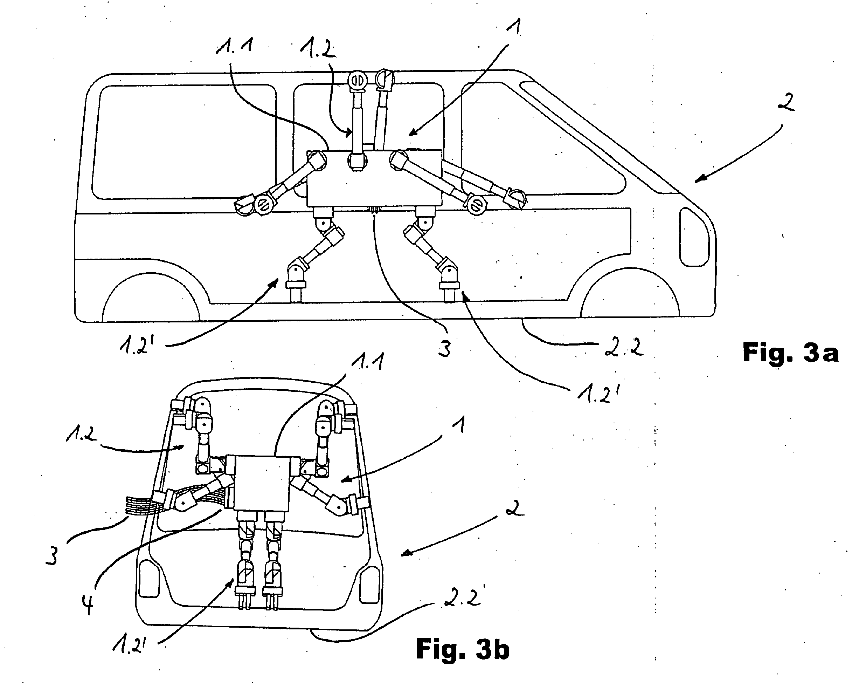

Die Fig. 3a, 3b zeigen den erfindungsgemäßen Spannroboter 1 in einer Ausgestaltung mit Gelenk-/Teleskoparmen 1.2, 1.2', die an ihren Enden Halteelemente 1.3 oder Werkzeuge (nicht dargestellt) zum Verspannen oder Fügen von Karosserieteilen 2.1, 2.2, 2.3 aufweisen. Wie bei den Ausführungsbeispielen der vorangehenden Figuren stützt sich der Spannroboter 1 über untere Arme 1.2' direkt auf dem Karosserieboden 2.2 ab. Im Gegensatz zu den Ausführungsbeispielen der Fig. 1a-d und 2a, b erfolgt die Energieversorgung und Datenübertragung über eine Kabelanordnung 3, die mittels eines Anschlusselements 4 trennbar oder permanent mit der Zentraleinheit 1.1 des Spannroboters 1 verbunden sein kann.

Die Fig. 1a bis 4b betreffen den Einsatz einer erfindungsgemäßen Vorrichtung 1 zum Positionieren von Bauteilen 2.1, 2.2, 2.3 einer Automobilkarosse 2. Im Zuge einer Fließfertigung, wie sie durch den Einsatz des erfindungsgemäßen Verfahrens bzw. einer erfindungsgemäßen Vorrichtung möglich wird, ist es allerdings nicht erforderlich, dass alle zusammenzufügenden Karosserie-Bauteile zu einem bestimmten gemeinsamen Zeitpunkt in der Arbeitsposition sind, was im Zuge der herkömmlichen Karossenfertigung im Automobilbau bislang das Entstehen eines Flaschenhalses an der "Geo-Station" bedingte. Es ist im Rahmen der erfindungsgemäßen Lösung auch möglich, die Karosserie 2 im wesentlichen bis auf wenige Bauteile 2.3, z.B. das Dach, zusammenzuheften, anschließend die erfindungsgemäße Vorrichtung durch eine verbleibende Öffnung - z.B. durch das Dach - zu entnehmen und abschließend in einem letzten Arbeitsschritt den Zusammenbau der Rohkarosse 2 zu vollenden.

Diese neuartige Vorgehensweise beim Positionieren zusammenzufügender Bauteile, wie Bauteile einer Automobilkarosserie, vermeidet so die prinzipbedingten Nachteile bestehender Fertigungskonzepte. Dies betrifft in besonderem Maße die aus dem Übergang zur Fließfertigung resultierende Vermeidung des "Flaschenhalses", der durch den in der bisherigen Fertigungstechnik notwendigen Stop bedingt ist.

Bezüglich der in einem erfindungsgemäßen Spannroboter 1 installierten Steuerungsintelligenz und der Art der Energieversorgung sowie der Datenübertragung sind folgende Varianten einzeln oder in Kombination möglich:

Der Spannroboter kann ohne eigene oder mit minimaler installierter Intelligenz ausgerüstet sein, d.h. er enthält nur die Aktoren (Gelenkantriebe, Greiferantriebe, gegebenenfalls Werkzeugantriebe) und die zugehörigen Leistungselektroniken. Die gesamte Steuerungsintelligenz befindet sich außerhalb des Spannroboters. Dies erfordert entweder eine ständige Datenverbindung mit der Steuerung oder zumindest eine temporäre Datenverbindung während der Phase des eigentlichen Spannvorgangs. Erstere ist dann auf jeden Fall notwendig, wenn während des Fügevorgangs aktiv gemessen und reagiert werden soll. Ab diesem Zeitpunkt kann bei Verzicht auf aktive Vorgänge die Datenverbindung beendet werden. Eine Abtrennung der Energieversorgung ist möglich durch eingebaute elektrische Energiespeicher und gegebenenfalls Speicher für Druckmedium (bei pneumatischen oder hydraulischen Aktoren). Die Aktoren halten in diesem Fall die von der Steuerung zuvor angefahrenen Positionen.

Entsprechende Ausführungsformen der erfindungsgemäßen Vorrichtung sind in den Fig. 5 und 6 dargestellt. Gemäß der Fig. 5 und 6 ist der erfindungsgemäße Spannroboter 1 vorzugsweise mit einer eigenständigen Steuerung ausgestattet. In diesem Falle sind die Steuerungsfunktionen weitgehend oder ganz im Spannroboter 1 implementiert. Die Fig. 5 zeigt einen Schnitt durch die Zentraleinheit 1.1 einer Ausführungsform des erfindungsgemäßen Spannroboters 1, der nur zeitweilig an eine externe Energieversorgung 3, 4 (vgl. Fig. 3b und 4b) angeschlossen ist.

Die Zentraleinheit 1.1 des Spannroboters 1 weist zu diesem Zweck eine Steuerungseinheit 1.8, beispielsweise eine PC-Steuereinheit mit einer Speichereinheit 1.8', wie einem flüchtigen oder einem Massenspeicher, einen elektrischen Energiespeicher 1.9, beispielsweise in Form eines Akkumulators, Einrichtungen zur Medienversorgung in den Armen 1.2, 1.2' vorhandener pneumatischer oder hydraulischer Aktoren (nicht gezeigt), beispielsweise mit Druckluft oder Kühlwasser in Form eines Druckspeichers 1.10 und an diesen angeschlossener Versorgungsschläuche 1.10', sowie eine mit der Steuereinheit 1.8 verbundene Ventilsteuerung 1.11 für das pneumatische bzw. hydraulische System der Vorrichtung auf.

Der elektrische Energiespeicher 1.9 ist über die in Fig. 3b und 4b gezeigte Anschlusseinheit 4 zumindest zeitweise mit einer externen elektrischen Energieversorgung verbindbar. Die in dem Energiespeicher 1.9 gespeicherte Energie steht anschließend zu einer zumindest zeitweise autarken Versorgung der Steuerungen 1.8, 1.11, damit zum gelenkigen Bewegen und Einstellen der Arme 1.2 und damit zum Verspannen der erfindungsgemäßen Vorrichtung innerhalb einer Rohkarosse 2 zur Verfügung. Die mit der Steuereinheit 1.8 über Kabel 1.12 verbundenen Sensoren 1.5 ermöglichen nach geeigneter Verarbeitung der von ihnen gelieferten Positionssignale durch die Steuereinheit 1.8 ein aktives Positionieren durch den erfindungsgemäßen Spannroboter 1, beispielsweise das Durchführen von Positionskorrekturen. Die PC-basierte
Steuerungseinheit 1.8 besitzt eine Offline-Programmierbarkeit, was zu einer Reduzierung der Zeit von Entwicklung bis zum Produktionsanlauf führt. Erfindungsgemäß kann die Steuerungseinheit 1.8 softwaretechnisch zum Erkennen eines Abweichungstrends eingerichtet sein, so dass auf der Grundlage der Positionssignale eine Korrektur des in der Steuerungseinheit ablaufenden Steuerungsprogramms möglich ist. Zusätzlich oder alternativ können auch Meldungen an eine nicht dargestellte, vorzugsweise extern angeordnete Einheit zur Qualitätssicherung, wie eine optische oder akustische Warneinrichtung oder ein Softwarelog, übermittelt werden.

Nach dem in der Fig. 6 gezeigten Ausführungsbeispiel weist der erfindungsgemäße Spannroboter 1 gegenüber der in Fig. 5 gezeigten Ausgestaltung zusätzlich eine Sende-/Empfangseinheit 1.4 in Form einer Antenne auf, die den Empfang von elektromagnetischer Energie von einer extern angeordneten Energiequelle ermöglicht. Auf diese Weise kommt der erfindungsgemäße Spannroboter 1 ohne die in Fig. 3b, 4b und 5 gezeigte Kabelanordnung 3 zum Zuführen von Energie aus, was den Verwendungsbereich der Vorrichtung zusätzlich erweitert: In ihrer Ausgestaltung mit autarker Stromversorgungseinheit 1.9 (Fig. 6) ist die erfindungsgemäße Vorrichtung hinsichtlich ihrer Arbeitsposition ungebunden an einer quasi beliebigen Position während des (räumlichen) Prozessablaufs einsetzbar, so dass die Möglichkeit einer Fließfertigung bei gleichzeitiger Entzerrung der Prozessschritte besteht, d.h. sämtliche Teile befinden sich jederzeit in einer linearen Bewegung mit einer Geschwindigkeit größer Null. Eine Datenverbindung nach außen ist im Zuge derartiger Ausgestaltungen nur kurzzeitig erforderlich, um Daten für die nächste zu bearbeitende Karosse von einem externen Leitrechner zu übernehmen und eventuell gewonnene Messdaten dorthin zu übermitteln. Ein temporäres Abkoppeln der Energieversorgung ist möglich, wenn die eingebauten Energiespeicher über ausreichende Kapazitäten verfügen.

Die Energieversorgung des erfindungsgemäßen Spannroboters 1 kann also prinzipiell auf folgende Weise erfolgen:

Gemäß der Fig. 5 weist der Spannroboter 1 eine Kabel- und gegebenenfalls eine Schlauchverbindung 3 nach außen zur Zuführung elektrischer Energie und eines Druckmediums auf (vgl. Fig. 4b). Die Verbindungskabelanordnung 3 muss ausreichend lang sein, um die Mitfahrstrecke des Spannroboters 1 in der Rohkarosse 2 abzudecken. Es ergeben sich außerdem Einschränkungen bei der Bewegung des Spannroboters. Alternativ sind auch eine temporäre Kabel- und gegebenenfalls Schlauchverbindung nach außen möglich, wobei die Verbindung nur während der Wartezeit auf die nächste Karosse oder während der anfänglichen Spannphase mit hohem Energiebedarf besteht und durch Abtrennen des Anschlusselements 4 jederzeit unterbrochen werden kann. Durch den begrenzten Verbindungszeitraum ergibt sich eine kleinere Mitfahrstrecke und damit eine geringere Kabellänge. Der Spannroboter 1 ist anschließend frei beweglich. Während der getrennten Verbindung oder bei einem Spannroboter, der gemäß der Fig. 6 keine Schlauch- oder Kabelverbindung aufweist, muss im Spannroboter 1 die notwendige Energie durch eingebaute elektrische Energiespeicher (Batterien, Akkus, Brennstoffzellen, etc.; 1.9, Fig. 6) und einen Speicher 1.10 für ein gegebenenfalls notwendiges Druckmedium (Gas, Hydraulikflüssigkeit) bereitgestellt werden. Wenn der Spannroboter 1 nach Beendigung des Spannzyklus von der Karosse 2 gelöst ist, kann die Verbindung wieder hergestellt und die.Energiespeicher 1.9 können für den nächsten Zyklus oder die nächsten Zyklen regeneriert werden. Beim Ausführungsbeispiel der Fig. 6 erhält der Spannroboter 1 seine Energie in Form elektromagnetischer Strahlung, die er mit Hilfe der Sende-/Empfangseinheit 1.4 empfängt.

Für die Datenübertragung vom Spannroboter 1 an gegebenenfalls vorhandene externe Steuerungseinrichtungen sind folgende alternative Ausgestaltungen möglich:

Bei (permanenter) Kabelverbindung (Fig. 3b, 4b, 5) ist eine drahtgebundene Datenübertragung anwendbar, bei temporär abgekoppelter Kabelverbindung kommen drahtlose Übertragungsmechanismen, wie induktive, infrarote oder Funkübertragungsmechanismen (Fig. 6) zur Anwendung.

Wird während der abgetrennten Phase auf Datenaustausch verzichtet, so können auch die genannten Datenübertragungsmittel wegfallen.

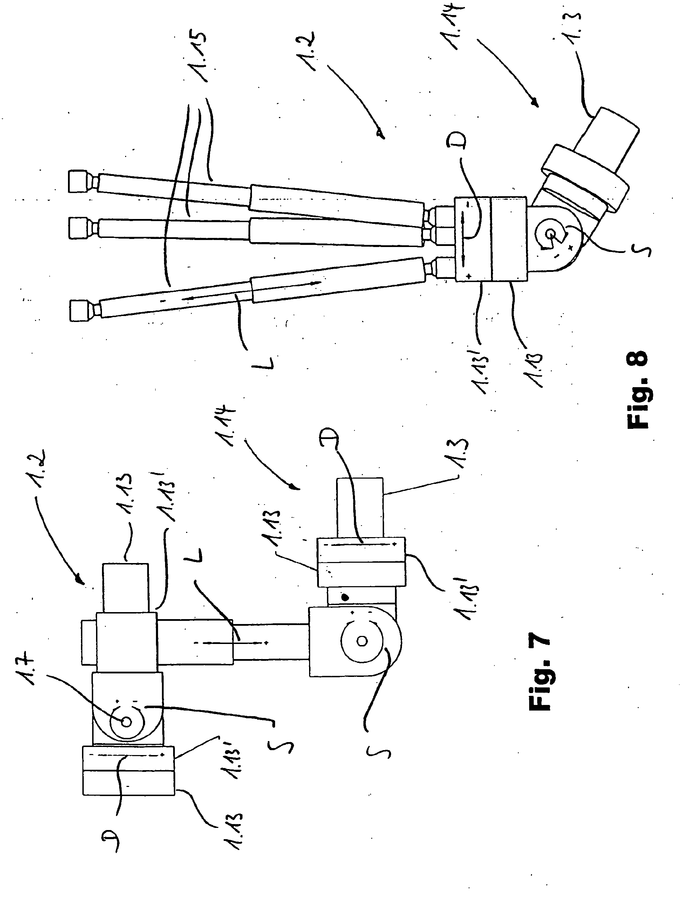

Die Fig. 7 zeigt eine vergrößerte schematische Darstellung eines Gelenk-/Teleskoparmes 1.2, wie er in einer erfindungsgemäßen Vorrichtung 1 gemäß der Fig. 3a,b, 4a,b und 6 zum Einsatz kommt. Ein derartiger Gelenk-/Teleskoparm 1.2 besitzt eine Mehrzahl von Motor-Getriebeanordnungen, z.B. pneumatischer oder hydraulischer Art, mit jeweils einem Motor 1.13 und einem Getriebe 1.13', die je nach Ausbildung und Anordnung innerhalb des Armes 1.2 zum Ausführen von Dreh- D, Linear- L oder Schwenkbewegungen S ausgebildet sind. Am distalen Ende 1.14 des Armes 1.2 ist erfindungsgemäß ein Halteelement 1.3 in Form eines Greifers, einer Kupplung, eines Magneten oder dergleichen angeordnet. Alternativ kann der Arm 1.2 an dieser Stelle auch ein Werkzeug (nicht gezeigt) zum (Bolzen-)Schweißen, Kleberauftrag, Clinchen oder dergleichen aufweisen. Mit seinem anderen Ende ist der Arm 1.2 am Zentralmodul 1.1 der Vorrichtung (gelenkig) befestigt.

Vorzugsweise ist in den Arm 1.2 zusätzlich eine geeignete Sensorik bestehend aus Kraft-, Momentensensoren oder dergleichen integriert. Der Gelenk-/Teleskoparm 1.2 gemäß der Fig. 7 ist für Bewegungen mit insgesamt fünf Freiheitsgraden ausgebildet.

Die Fig. 8 zeigt eine alternative Ausgestaltung eines Armes 1.2 der erfindungsgemäßen Vorrichtung 1. Der Arm 1.2 gemäß der Fig. 8 ist als Tripodarm ausgebildet, bei dem die Positionierung eines dem am distalen Ende 1.14 des Armes 1.2 angeordneten Halteelement 1.3 oder Werkzeug zugeordneten Tool-Center-Point (TCP) durch unterschiedliche Längenänderung L von drei Linearelementen (Teleskopelemente) 1.15 erfolgt.

Die Fig. 9 zeigt eine entsprechende Ansicht eines Gelenkarms 1.2, wie er bei den Ausgestaltungen der erfindungsgemäßen Vorrichtung 1 gemäß den Fig. 1a-d und 2a, b und 5 zum Einsatz kommt.

Die Fig. 10 zeigt eine perspektivische Ansicht eines erfindungsgemäßen Spannroboters 1, bei dem spezielle Greifeinrichtungen 1.16 an der Unterseite 1.17 der Zentraleinheit 1.1 angeordnet sind. Mit Hilfe der gezeigten Greifeinrichtungen 1.16, die wie die Halteelemente 1.3 auch als Kupplungen oder Magneten ausgebildet sein können, und gegebenenfalls weiterer zusätzlicher Bolzen oder Zapfen (nicht gezeigt) kann der erfindungsgemäße Spannroboter 1 mit dem Boden 2.2 der Rohkarosse 2 verbunden und unabhängig von den Spannarmen 1.2 abgestützt und befestigt werden.

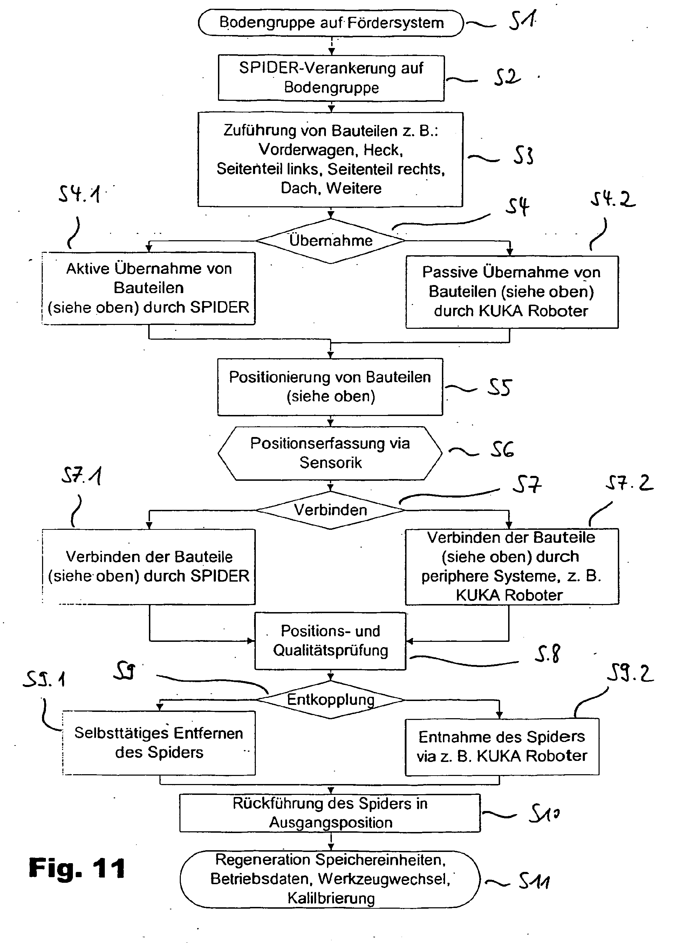

Die Fig. 11 zeigt anhand eines Ablaufdiagramms die im Verlauf eines Arbeitszyklus, d.h. beim Zusammenfügen einer Rohkarosse 2 unter Verwendung des erfindungsgemäßen Spannroboters ablaufenden Aktionen. Aufgrund seines spinnenartigen Aussehens ist der erfindungsgemäße Spannroboter 1 in der Fig. 11 als SPIDER bezeichnet.

In.Schritt S1 wird eine Bodengruppe der zusammenzufügenden Fahrzeugkarosserie auf einem Fördersystem bereitgestellt, beispielsweise mittels des in der Fig. 4a, 4b gezeigten Rahmenelements 5. In Schritt S2 wird der SPIDER 1 auf der Bodengruppe 2.2 der Karosserie 2 verankert, beispielsweise mittels der in Fig. 10 gezeigten Greifeinrichtungen 1.16. Im anschließenden Schritt S3 werden weitere Bauteile 2.1, 2.3 zugeführt und in Schritt S4 übernommen. Dabei erfolgt die Übernahme in Schritt S4 entweder aktiv durch die erfindungsgemäße Spannvorrichtung 1 (Schritt S4.1) oder "passiv" durch ein zusätzliches Handhabungsgerät, wie einen Industrieroboter (Schritt S4.2). Im anschließenden Schritt S5 werden die Bauteile 2.1, 2.2, 2.3 positioniert (Schritt S5), wonach in Schritt S6 vorzugsweise eine Positionserfassung durch die Sensorik 1.5 bzw. die in den Armen 1.2 der Vorrichtung 1 enthaltenen weiteren Sensoren erfolgt.

Sobald die zusammenzufügenden Bauteile korrekt positioniert sind, erfolgt in Schritt S7 das Verbinden der Bauteile entweder (Schritt S7.1) durch die erfindungsgemäße Spannvorrichtung 1 selbst, sofern diese an ihren Armen 1.2 geeignete Werkzeuge trägt, oder durch externe Systeme, wie Industrieroboter (Schritt S7.2). Nach dem Verbinden erfolgt in Schritt S8 eine Positions- und Qualitätsprüfung (z.B. mittels der Sensorik 1.5).

Nach dem Entkoppeln der erfindungsgemäßen Spannvorrichtung 1 und der zusammengefügten Rohrkarosse 2 in Schritt S9 entfernt sich die erfindungsgemäße Spannvorrichtung 1 entweder selbständig aus der Karosserie 2 (Schritt S9.1) oder wird durch ein externes Handhabungsgerät aus dieser entnommen (Schritt S9.2). Anschließend erfolgt in Schritt S10 die Rückführung des Spannroboters 1 in eine Ausgangsposition, gegebenenfalls verbunden mit einer Regeneration von Speichereinheiten und/oder Betriebsdaten, einem Werkzeugwechsel oder einer Kalibrierung in Schritt S11. Anschließend wartet der erfindungsgemäße Spannroboter 1 in der Ausgangsposition auf die nächste zu bearbeitende Bodengruppe (Schritt S1).

### Bezugszeichenliste

- 1: Spannvorrichtung
- 1.1: Zentralmodul
- 1.2, 1.2': Arm
- 1.3: Halteelement
- 1.4: Sende-/Empfangseinheit
- 1.5: Sensor
- 1.6: Lenker
- 1.7: Gelenke
- 1.8: Steuerungseinheit
- 1.9: Energiespeicher
- 1.10: Druckspeicher
- 1.10': Versorgungsschlauch
- 1.11: Ventilsteuerung
- 1.12: Kabel
- 1.13: Motor
- 1.13': Getriebe
- 1.14: distales Ende (von 1.2)
- 1.15: Teleskopelement
- 1.16: Greifeinrichtung
- 1.17: Unterseite (von 1.1)

- 2: Rohkarosse
- 2.1: Seitenteil
- 2.2: Boden
- 2.3: Dach

- 3: Kabelanordnung
- 4: Anschlusseinheit
- 5: Rahmenelement

- D: Drehbewegung
- L: Linearbewegung
- S: Schwenkbewegung

## Patentansprüche

1. Verfahren zum Positionieren von zusammenzufügenden Bauteilen, wobei die Bauteile von einer Position innerhalb einer gewünschten Anordnung der zu fügenden Bauteile (2.1, 2.2, 2.3) durch eine Spannvorrichtung mit einem beweglicher Zentralmodul und mit einer Mehrzahl von mit dem Zentralmodul (1.1) verbundenen gelenkigen Armen (1.2, 1.2') gehalten werden.

2. Verfahren nach Anspruch 1, **dadurch gekennzeichnet, dass** die Spannvorrichtung in einer ersten Ruhestellung mit eingefalteten und/oder an das Zentralmodul angelegten Armen bei einer vorbestimmten Ruheposition wartet, dass anschließend die zu fügenden Bauteile durch weitere geeignete Handhabungsgeräte zumindest grob zusammengefügt werden, wobei die Spannvorrichtung in einem Raum innerhalb der zusammenzufügenden Bauteile angeordnet ist, und dass dann durch geeignete Positionierung der Arme im Raum die Bauteile verspannt werden.

3. Verfahren nach Anspruch 1 oder 2, **dadurch gekennzeichnet, dass** vor einem Zusammenheften der Bauteile Positionsmessungen an den zu fügenden Bauteilen und bei festgestellten Positionsabweichungen aktive Positionskorrekturen durch die Spannvorrichtung erfolgen.

4. Verfahren nach Anspruch 3, **dadurch gekennzeichnet, dass** Messwerte der Positionsmessungen zwischengespeichert und nach Erkennung eines Abweichungstrends zur Korrektur eines Steuerungsprogramms für die Spannvorrichtung und/oder für Meldungen an eine Qualitätssicherungseinheit verwendet werden.

5. Verfahren nach einem der Ansprüche 1 bis 4, **dadurch gekennzeichnet, dass** die Spannvorrichtung nach einem anschließenden Zusammenheften der Bauteile oder weiteren nachgeschalteten Fertigungsprozessen sich selbständig wieder aus dem Raum innerhalb der Bauteile herausbewegt.

6. Verfahren nach einem der Ansprüche 1 bis 4, **dadurch gekennzeichnet, dass** die Spannvorrichtung nach einem anschließenden Zusammenheften der Bauteile oder weiteren nachgeschalteten Fertigungsprozessen von einem weiteren Handhabungsgerät wieder aus dem Raum innerhalb der Bauteile herausbewegt wird.

7. Verfahren nach einem der Ansprüche 3 bis 6, **dadurch gekennzeichnet, dass** das Zusammenheften durch die Spannvorrichtung selbst mittels geeigneter Werkzeuge erfolgt.

8. Verfahren nach einem der Ansprüche 1 bis 7, **dadurch gekennzeichnet, dass** die Arme nach Maßgabe einer Steuerungseinheit synchron im Raum positioniert werden.

9. Verfahren nach einem der Ansprüche 1 bis 7, **dadurch gekennzeichnet, dass** die Arme nach Maßgabe einer Steuerungseinheit asynchron im Raum positioniert werden.

10. Verfahren nach einem der Ansprüche 1 bis 9, **dadurch gekennzeichnet, dass** Bewegungen der Arme in jeweils mindestens drei Freiheitsgraden erfolgen.

11. Verfahren nach einem der Ansprüche 1 bis 10, **dadurch gekennzeichnet, dass** sich die Spannvorrichtung direkt auf einem Bodenteil der Bauteilstruktur abstützt.

12. Verfahren nach einem der Ansprüche 1 bis 11, **dadurch gekennzeichnet, dass** sich die Spannvorrichtung auf einem die Bauteile tragenden Förderelement abstützt.

13. Vorrichtung zum Positionieren von zusammenzufügenden Bauteilen mit einer Spannvorrichtung mit einem beweglichen Zentralmodul (1.1) und mit einer Mehrzahl mit dem Zentralmodul verbundenen im Raum beweglichen gelenkigen Armen (1.2, 1.2'), die jeweils mindestens ein Halteelement (1.3) zum Halten der Bauteil (2.1, 2.2, 2.3) von einer innerhalb der gewünschten Anordnung der Bauteile liegenden Position aus aufweisen.

14. Vorrichtung nach Anspruch 13, **dadurch gekennzeichnet, dass** die Arme (1.2, 1.2') für Bewegungen mit jeweils mindestens drei Freiheitsgraden ausgebildet sind.

15. Vorrichtung nach Anspruch 13 oder 14, **dadurch gekennzeichnet, dass** eine Anzahl der Arme (1.2, 1.2') jeweils mindestens ein Werkzeug zum Verbinden der zusammengefügten Bauteile (2.1, 2.2, 2.3) aufweisen.

16. Vorrichtung nach einem der Ansprüche 13 bis 15, **dadurch gekennzeichnet, dass** diese in einen Raum innerhalb einer gewünschten Anordnung der zu fügenden Bauteile (2.1, 2.2, 2.3) einbringbar und nach einem anschließenden Zusammenheften der Bauteile (2.1, 2.2, 2.3) oder weiteren nachgeschalteten Fertigungsprozessen wieder daraus entfernbar ist.

17. Vorrichtung nach einem der Ansprüche 13 bis 16, **gekennzeichnet durch** eine rechnergestützte Steuerungseinheit (1.8).

18. Vorrichtung nach einem der Ansprüche 13 bis 17, **dadurch gekennzeichnet, dass** die Arme (1.2) Einrichtungen (1.10, 1.10') für eine Medienzuführung zu den Halteelementen (1.3) und/oder Werkzeugen aufweisen.

19. Vorrichtung nach einem der Ansprüche 13 bis 18, **dadurch gekennzeichnet, dass** das Zentralmodul (1.1) Einrichtungen (1.10, 1.10') zur Medienversorgung für die Arme (1.2, 1.2') aufweist.

20. Vorrichtung nach einem der Ansprüche 13 bis 19, **dadurch gekennzeichnet, dass** das Zentralmodul (1.1) eine Stromversorgungseinheit (1.9) aufweist.

21. Vorrichtung nach einem der Ansprüche 13 bis 20, **dadurch gekennzeichnet, dass** die Arme (1.2, 1.2') zum Bereitstellen hoher statischer Haltekräfte bis 3000 N ausgebildet sind.

22. Vorrichtung nach einem der Ansprüche 13 bis 21, **dadurch gekennzeichnet, dass** jeder Arm (1.2, 1.2') einen eigenen steuerungsrelevanten Punkt (TCP) aufweist.

23. Vorrichtung nach einem der Ansprüche 13 bis 22, **dadurch gekennzeichnet, dass** diese zum selbständigen Hineinfahren in einen Raum innerhalb der zu fügenden Bauteile (2.1, 2.2, 2.3) ausgebildet ist.

24. Vorrichtung nach einem der Ansprüche 13 bis 23, **dadurch gekennzeichnet, dass** diese zum selbständigen Hinausfahren aus dem Raum innerhalb der zu fügenden Bauteile (2.1, 2.2, 2.3) ausgebildet ist.

25. Vorrichtung nach einem der Ansprüche 13 bis 24, **dadurch gekennzeichnet, dass** die Arme (1.2, 1.2') einfaltbar und/oder an das Zentralmodul (1.1) anlegbar sind.

26. Vorrichtung nach einem der Ansprüche 13 bis 25, **gekennzeichnet durch** mindestens eine Abstützeinrichtung (1.2', 1.16) zum Abstützen der Spannvorrichtung auf einem Bauteil (2.2) der Bauteilstruktur und/oder einem bauteiltragenden Förderelement (5).

27. Vorrichtung nach einem der Ansprüche 13 bis 26, **dadurch gekennzeichnet, dass** an den Armen (1.2, 1.2') und/oder dem Zentralmodul (1.1) Sensoren (1.5) zum Aufnehmen von Positionsmesswerten für die Bauteile (2.1, 2.2, 2.3) und/oder weiterer hinsichtlich einer Qualitätssicherung der nachgeschalteten Fertigungsprozesse relevanter Messwerte angeordnet sind.

28. Vorrichtung nach Anspruche 26, **gekennzeichnet durch** eine Speichereinheit (1.8') zum Zwischenspeichern der Messwerte.

## Claims

1. A method for positioning components to be joined together, wherein the components are held from a position within a desired arrangement of the components to be joined by at least one central module with a plurality of articulated arms (clamping device).

2. The method according to claim 1, wherein the clamping device waits in a first idle position with folded arms and/or arms applied to the central module in a predetermined home position, wherein subsequently the components to be joined are at least roughly assembled by further suitable handling devices, wherein the clamping device is being positioned in a space within the components to be joined and then said components are clamped by suitable positioning of the arms in said space.

3. The method according to claim 1, wherein prior to a tacking together of the components, position measurements on the components to be joined are performed and at established position deviations active position corrections are carried out by the clamping device.

4. The method according to claim 3, wherein measured position values are buffered and are used after the detection of a deviation trend for the correction of a control program for the clamping device and/or for messages to a quality assurance unit.

5. The method according to claim 1, wherein following a subsequent tacking together of the components or further downstream production processes, the clamping device independently again moves out of said space within the components.

6. The method according to claim 1, wherein, following the subsequent tacking together of the components or further downstream production processes, the clamping device is moved again out of said space within the components by a further handling device.

7. The method according to claim 3, wherein tacking together is carried out by the actual clamping device using suitable tools.

8. The method according to claim 1, wherein the arms are positioned synchronously in said space in accordance with a control unit.

9. The method according to claim 1, wherein the arms are positioned asynchronously in said space in accordance with a control unit.

10. The method according to claim 1, wherein movements of the arms take place in at least three degrees of freedom respectively.

11. The method according to claim 1, wherein the clamping device is supported directly on a base part of the component structure.

12. The method according to claim 1, wherein the clamping device is supported on a conveyor element carrying the components.

13. A device for positioning components to be joined together, wherein a movable central module and a plurality of thereto connected articulated arms, which are movable in a space and which in each case have at least one holding element for holding the components.

14. The device according to claim 13, wherein the arms (1.2, 1.2') are constructed for movements with in each case at least three degrees of freedom.

15. The device according to claim 13 or 14, wherein a plurality of arms (1.2, 1.2') in each case has at least one tool for the connection of the assembled components (2.1, 2.2, 2.3).

16. The device according to one of the claims 13 to 15, wherein it is positionable in a space within a desired arrangement of the components (2.1, 2.2, 2.3)to be joined and is again removable therefrom after a subsequent tacking together of the components (2.1, 2.2., 2.3) or further downstream production processes.

17. The device according to one of the claims 13 to 16, wherein there is a computer-based control unit (1.8).

18. The device according to one of the claims 13 to 17, wherein the arms (1.2) have means for media supply to the holding elements (1.3) and/or tools.

19. The device according to one of the claims 13 to 18, wherein the central module (1.1) has means for media supply to the arms (1.2, 1.2').

20. The device according to one of the claims 13 to 19, wherein the central module (1.1) has a power supply unit (1.9).

21. The device according to one of the claims 13 to 20, wherein the arms (1.2, 1.2') are constructed for the provision of high static holding forces up to 3000 N.

22. The device according to one of the claims 13 to 21, wherein each arm (1.2, 1.2') has its own control-relevant point or TCP.

23. The device according to one of the claims 13 to 22, wherein the latter is constructed for automatically moving into a space within the components (2.1, 2.2, 2.3) to be joined.

24. The device according to one of the claims 13 to 23, wherein the latter is constructed for automatically moving out of the space within the components (2.1, 2.2, 2.3) to be joined.

25. The device according to one of the claims 13 to 24, wherein the arms (1.2, 1.2') can be folded in and/or applied to the central module (1.1).

26. The device according to one of the claims 13 to 25, wherein there is at least one support mechanism (1.2', 1.16) for supporting the clamping device on a component (2.2) of the component structure and/or a component-carrying conveyor element (5).

27. The device according to one of the claims 13 to 26, wherein on the arms (1.2, 1.2') and/or central module (1.1) sensors (1.5) for recording measured position values for the components (2.1, 2.2, 2.3) and/or further measured values relevant with respect to a quality assurance for the downstream production processes are provided.

28. The device according to claim 26, wherein there is a storage unit (1.8') for buffering the measured values.

## Revendications

1. Procédé de positionnement d'éléments à assembler, les éléments étant maintenus, depuis une position se trouvant dans un agencement souhaité des éléments (2.1, 2.2, 2.3) à assembler, par un dispositif tendeur avec un module central mobile et une pluralité de bras (1.2, 1.2') articulés reliés au module central (1.1).

2. Procédé selon la revendication 1, **caractérisé en ce que** le dispositif tendeur reste dans une première position de repos avec les bras repliés et/ou reposant contre le module central dans une position de repos prédéfinie, que les éléments à assembler sont ensuite assemblés au moins grossièrement à l'aide d'appareils de manutention adaptés supplémentaires, le dispositif tendeur étant disposé dans un espace situé à l'intérieur des éléments à assembler et que les éléments sont tendus dans l'espace des éléments par un positionnement adapté des bras.

3. Procédé selon la revendication 1 ou 2, **caractérisé en ce que** des mesures de position sont réalisées au niveau des éléments à assembler avant un agrafage des éléments et que des corrections de position actives sont réalisées au moyen du dispositif tendeur lorsque des écarts de position sont constatés.

4. Procédé selon la revendication 3, **caractérisé en ce que** des valeurs mesurées des mesures de position sont enregistrées provisoirement et utilisées après détection d'une tendance d'écartement, en vue de corriger un programme de commande du dispositif tendeur et/ou les messages envoyés à une unité de contrôle de la qualité.

5. Procédé selon l'une quelconque des revendications 1 à 4, **caractérisé en ce que** le dispositif tendeur ressort de façon autonome de l'espace prévu à l'intérieur des éléments après un agrafage des éléments ou d'autres processus de fabrication ultérieurs.

6. Procédé selon l'une quelconque des revendications 1 à 4, **caractérisé en ce que** le dispositif tendeur est de nouveau ressorti de l'espace prévu à l'intérieur des éléments par un autre appareil de manutention après un agrafage des éléments ou d'autres processus de fabrication ultérieurs.

7. Procédé selon l'une quelconque des revendications 3 à 6, **caractérisé en ce que** l'agrafage est réalisé au moyen du dispositif tendeur lui-même à l'aide d'outils adaptés.

8. Procédé selon l'une quelconque des revendications 1 à 7, **caractérisé en ce que** les bras sont positionnés de façon synchrone dans l'espace conformément aux ordres d'une unité de commande.

9. Procédé selon l'une quelconque des revendications 1 à 7, **caractérisé en ce que** les bras sont positionnés de façon asynchrone dans l'espace conformément aux ordres d'une unité de commande.

10. Procédé selon l'une quelconque des revendications 1 à 9, **caractérisé en ce que** les mouvements des bras se produisent respectivement selon au moins trois degrés de liberté.

11. Procédé selon l'une quelconque des revendications 1 à 10, **caractérisé en ce que** le dispositif tendeur s'appuie directement sur une pièce plancher de la structure élémentaire.

12. Procédé selon l'une quelconque des revendications 1 à 11, **caractérisé en ce que** le dispositif tendeur s'appuie sur un élément de convoyage supportant les éléments.

13. Dispositif de positionnement des éléments à assembler à l'aide d'un dispositif tendeur avec un module central (1.1) mobile et avec une pluralité de bras (1.2, 1.2') articulés mobiles dans l'espace reliés au module central comportant respectivement au moins un élément d'arrêt (1.3) arrêtant les éléments (2.1, 2.2, 2.3) dans une position se trouvant dans l'agencement souhaité des éléments.

14. Dispositif selon la revendication 13, **caractérisé en ce que** les bras (1.2, 1.2') sont réalisés avec respectivement au moins trois degrés de liberté pour effectuer leurs mouvements.

15. Dispositif selon la revendication 13 ou 14, **caractérisé en ce qu'**un certain nombre de bras (1.2, 1.2') comportent respectivement au moins un outil de jonction des éléments (2.1, 2.2, 2.3) à assembler.

16. Dispositif selon l'une quelconque des revendications 13 à 15, **caractérisé en ce que** celui-ci peut être amené dans un espace compris dans un agencement souhaité des éléments (2.1, 2.2, 2.3) à assembler et en être retiré après l'agrafage des éléments (2.1, 2.2, 2.3) ou tout autre processus de fabrication ultérieur.

17. Dispositif selon l'une quelconque des revendications 13 à 16, **caractérisé par** une unité de commande (1.8) assistée par ordinateur.

18. Dispositif selon l'une quelconque des revendications 13 à 17, **caractérisé en ce que** les bras (1.2) comportent des dispositifs (1.10, 1.10') permettant l'introduction d'agent destiné aux éléments d'arrêt (1.3) et/ou aux outils.

19. Dispositif selon l'une quelconque des revendications 13 à 18, **caractérisé en ce que** le module central (1.1) comporte des dispositifs (1.10, 1.10') d'alimentation en agent des bras (1.2, 1.2').

20. Dispositif selon l'une quelconque des revendications 13 à 19, **caractérisé en ce que** le module central (1.1) comporte une unité d'alimentation en courant (1.9).

21. Dispositif selon l'une quelconque des revendications 13 à 20, **caractérisé en ce que** les bras (1.2, 1.2') sont réalisés pour fournir des forces d'arrêt statiques élevées pouvant atteindre 3000 N.

22. Dispositif selon l'une quelconque des revendications 13 à 21, **caractérisé en ce que** chaque bras (1.2, 1.2') comporte un point de commande (TCP).

23. Dispositif selon l'une quelconque des revendications 13 à 22, **caractérisé en ce qu'**il est réalisé pour rentrer de façon autonome dans un espace prévu à l'intérieur des éléments (2.1, 2.2, 2.3) à assembler.

24. Dispositif selon l'une quelconque des revendications 13 à 23, **caractérisé en ce qu'**il est réalisé pour sortir de façon autonome de l'espace prévu à l'intérieur des éléments (2.1, 2.2, 2.3) à assembler.

25. Dispositif selon l'une quelconque des revendications 13 à 24, **caractérisé en ce que** les bras (1.2, 1.2') peuvent être repliables et/ou reposer contre le module central (1.1).

26. Dispositif selon l'une quelconque des revendications 13 à 25, **caractérisé par** au moins un dispositif de soutien (1.2', 1.16) soutenant le dispositif tendeur sur un élément (2.2) de la structure élémentaire et/ou sur un élément de convoyage (5) supportant l'élément.

27. Dispositif selon l'une quelconque des revendications 13 à 26, **caractérisé en ce que** des capteurs (1.5) sont disposés au niveau des bras (1.2, 1.2') et/ou du module central (1.1) pour prendre des valeurs mesurées de position des éléments (2.1, 2.2, 2.3) et/ou d'autres valeurs mesurées adaptées par rapport à un contrôle qualité d'autres processus de fabrication ultérieurs.

28. Dispositif selon la revendication 26, **caractérisé par** une unité de mémorisation (1.8') destinée à mémoriser de façon temporaire les valeurs mesurées.
